Europäisches Patentamt

European Patent Office

Office européen des brevets

(11) Veröffentlichungsnummer: **0 264 027**

**A2**

## (12) EUROPÄISCHE PATENTANMELDUNG

(21) Anmeldenummer: **87114301.2**

(22) Anmeldetag: **30.09.87**

(51) Int. Cl.4 **G01V 9/04**

(30) Priorität: **16.10.86 DE 3635271**

(43) Veröffentlichungstag der Anmeldung:
**20.04.88 Patentblatt 88/16**

(84) Benannte Vertragsstaaten:
**DE FR GB IT**

(71) Anmelder: **Erwin Sick GmbH Optik-Elektronik**
**Sebastian-Kneipp-Strasse 1**
**D-7808 Waldkirch(DE)**

(72) Erfinder: **Fetzer, Günter**
**Sonnhalde 97a**
**D-7803 Gundelfingen(DE)**

(74) Vertreter: **Dipl.-Phys.Dr. Manitz Dipl.-Ing.,**
**Dipl.-Wirtsch. Finsterwald Dipl.-Chem.Dr.**
**Heyn Dipl.-Phys. Rotermund Morgan,**
**B.Sc.(Phys.)**
**Robert-Koch-Strasse 1**
**D-8000 München 22(DE)**

(54) **Lichtvorhangsvorrichtung.**

(57) Bei einer Lichtvorhangsvorrichtung sind mehrere unter einem Winkel zu einer Lichteinfallsrichtung hintereinander und seitenversetzt angeordnete Streifenspiegel (11a, 11b. 11c) vorgesehen. Diese lenken das in der Lichteinfallsrichtung auftreffende Licht eines schmalen aber dicken Lichtvorhanges unter einem Winkel von vorzugsweise 90 ° ab und bilden so unter dem betreffenden Winkel mehrere seitlich versetzt hintereinander angeordnete, entsprechend dünnere Lichtvorhänge (13a, 13b. 13c). Im gleichen Abstand von jedem Streifenspiegel (11a, 11b. 11c) ist ein sich in Querrichtung des zugeordneten dünnen Lichtvorhangs (13a, 13b, 13c) erstreckender streifenförmiger Umlenkspiegel (12a, 12b, 12c) unter einem Winkel von 45 ° zur Ebene des zugeordneten Lichtvorhangs angeordnet.

Fig.1

EP 0 264 027 A2

## Lichtvorhangsvorrichtung

Die Erfindung betrifft eine Lichtvorhangsvorrichtung nach dem Oberbegriff des Patentanspruchs 1.

Bei einer bekannten Lichtvorhangsvorrichtung dieser Art (DE-PS 25 32 602) wird durch die Streifenspiegel ein von einem Weiler'schem Spiegelrad erzeugter, relativ schmaler aber dicker Lichtvorhang in eine der Zahl der Streifenspiegel entsprechende Zahl von gleich breiten, aber entsprechend dünneren Lichtvorhängen, die seitlich versetzt hintereinander angeordnet sind, zerlegt, so daß insgesamt ein relativ breiter Überwachungsbereich erzielt wird. Besonders bevorzugt ist dabei die Ausführungsform nach den Fig. 5, 6 der Patentschrift 25 32 602, weil hierdurch ein lückenloser breiter Gesamtlichtvorhang erzielt wird, der aber aus einzelnen seitlich versetzten Einzelvorhängen zusammengesetzt ist.

Diese seitliche Versetzung der den Gesamtlichtvorhang bildenden schmalen Einzellichtvorhänge kann bei verschiedenen Anwendungen störend sein. Wird z.B. zum Empfang des Lichtes aus dem Lichtvorhang ein Lichtleitstab verwendet, so muß dessen Empfangsapertur so groß ausgelegt sein, daß das von sämtlichen zueinander seitlich versetzten schmalen Lichtvorhängen kommende Licht noch erfaßt werden kann, was sehr massive Lichtleitstäbe mit großem Durchmesser erfordert. Im Falle einer Autokollimationseinrichtung muß der am Ende der Überwachungsstrecke vorgesehene Retroreflektor breiter ausgelegt werden. Auch ist es bei derartigen Lichtvorhängen problematisch, eine durchgehende Zylinderlinse zur Lichtsammlung zu verwenden, wenn diese nicht ebenfalls die durch den Seitenversatz bedingte große Apertur aufweist.

Das Ziel der vorliegenden Erfindung besteht nun darin, eine Lichtvorhangsvorrichtung der eingangs genannten Gattung zu schaffen, bei der der seitliche Versatz der einzelnen hintereinander angeordneten schmalen und dünnen Lichtvorhänge entfällt.

Zur Lösung dieser Aufgabe sind die Merkmale des kennzeichnenden Teils des Patentanspruchs vorgesehen.

Der Erfindungsgedanke ist somit darin zu sehen, daß das Licht der einzelnen schmalen und dünnen Lichtvorhänge um 90 ° aus deren Ebene abgelenkt wird, wodurch die Lichtstrahlen sämtlicher Lichtvorhänge in ein und dieselbe Ebene gelangen, so daß ein durchgehender Gesamtlichtvorhang erzielt wird, welcher zwar aus entsprechen der Anzahl der Streifenspiegel zusammengesetzten schmalen und dünnen Einzellichtvorhängen besteht, deren Seitenversatz jedoch vollständig aufgehoben ist. Indem die Umlenkspiegel unter etwas anderen Winkeln als 45 ° zur Ebene des zugeordneten schmalen dünnen Lichtvorhangs geneigt werden, können auch bewußt irgendwelche gewünschten kleineren Seitenversätze der aneinandergrenzenden Lichtvorhänge verwirklicht werden.

Minimal unterschiedliche Längen der über die einzelnen Streifen-und Umlenkspiegel laufenden Lichtstrahlen werden durch die Merkmale des Patentanspruchs 2 gewährleistet.

Die Erfindung wird im folgenden beispielsweise anhand der Zeichnung beschrieben; in dieser zeigt:

Fig. 1 eine schematische Seitenansicht einer mit einem Weiler'schem Spiegelrad arbeitenden Lichtvorhangsvorrichtung,

Fig. 2 eine Ansicht nach Linie II-II in Fig. 1 und

Fig. 3 eine Ansicht nach Linie III-III in Fig. 1.

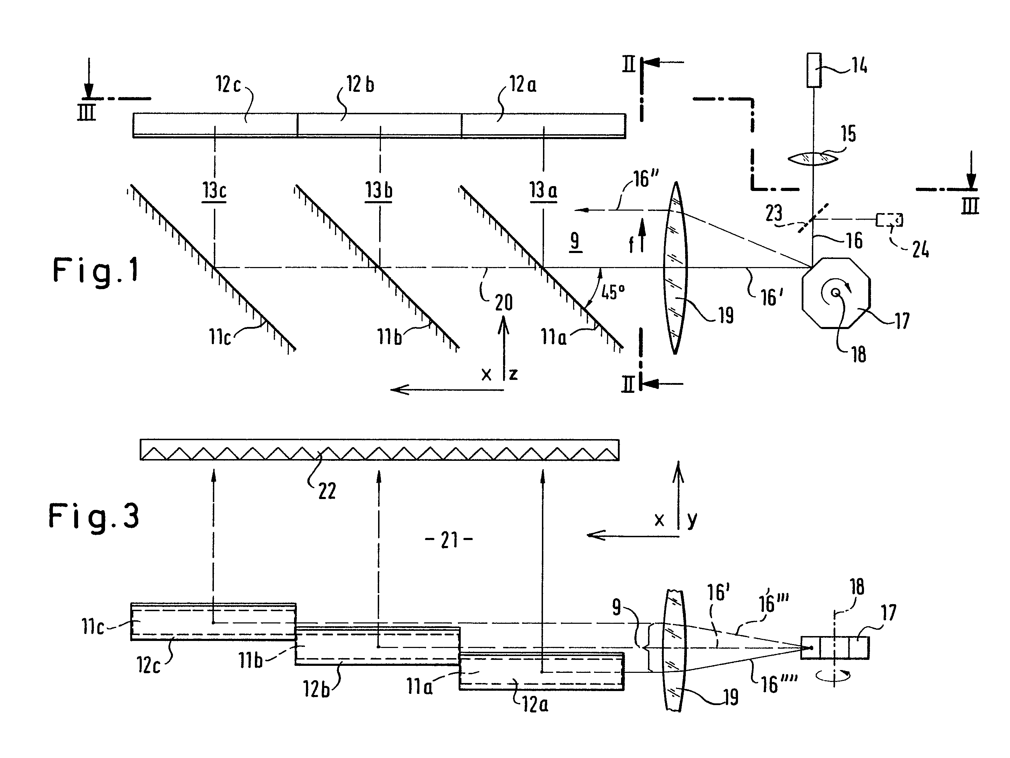

Nach der Zeichnung erzeugt eine Lichtquelle z.B. ein Laser 14 über eine geeignete Optik 15 einen scharf gebündelten Lichtstrahl 16, der auf ein Spiegelrad 17 senkrecht zu dessen Dreh achse 18 auftrifft. Das Spiegelrad lenkt den auftreffenden Lichtstrahl 16 gemäß den Fig. 1 und 3 zu einer Linse 19 um, deren Brennpunkt auf der reflektierenden Oberfläche des Spiegelrades 17 angeordnet ist. Beim Umlaufen des Spiegelrades 17 in Richtung des Pfeiles tastet der reflektierte Laserstrahl 16' die Apertur der Linse 19 in Richtung z ab, so daß aus der Linse in x-Richtung ein parallel zu sich selbst und zur optischen Achse 20 verschobener Fahrstrahl 16″ erzeugt wird.

Nach Fig. 3 ist das verwendete Spiegelrad ein Weiler'sches Spiegelrad, bei dem die aufeinanderfolgenden Spiegelflächen nicht sämtlich parallel zur Drehachse 18 liegen, sondern aufeinanderfolgend mehr oder weniger relativ zur Drehachse gekippt sind, so daß nur einige Spiegelflächen den Eingangslichtstrahl 16 (Fig. 1) in der Zeichnungsebene der Fig. 1 als Strahl 16' reflektieren. Andere Spiegelflächen reflektieren den Eingangslichtstrahl 16 in der einen oder anderen Richtung etwas aus der Zeichnungsebene der Fig. 1 heraus, was in Fig. 3 durch die Seitenstrahlen 16‴ und 16⁗ angedeutet ist.

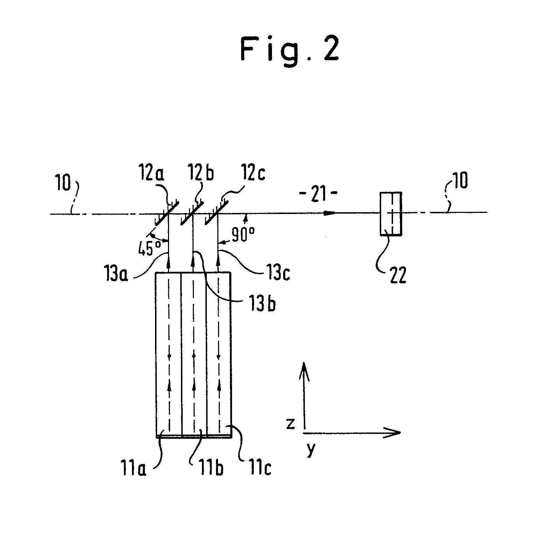

Die parallelisierten Lichtstrahlen, die aus der Linse 19 austreten, bilden somit einen aus mehreren in der Ansicht der Fig. 3 nebeneinander liegenden dünnen Teil-Lichtvorhängen bestehenden dicken Gesamtlichtvorhang 9, dessen von den einzelnen unterschiedlich geneigten Spiegelflächen erzeugten dünnen Teil-Lichtvorhänge von in x-Richtung hintereinander und in y-Richtung (Fig. 2, 3) seitenversetzt angeordneten ebenen Streifenspiegeln 11a, 11b bzw. 11c empfangen werden, die unter 45° zur optischen Achse 20 angeordnet sind und die auftreffenden Lichtstrahlen um 90° umlenken.

Auf diese Weise werden gemäß den Fig. 1 und 2 hintereinander drei dünne, seitlich versetzte Lichtvorhänge 13a, 13b bzw. 13c gebildet.

Nach Fig. 1 und 2 sind oberhalb der Streifenspiegel 11a, 11b und 11c parallel zueinander und zur optischen Achse 20 entsprechend dimensionierte plane Umlenkspiegel 12a, 12b bzw. 12c angeordnet, welche sich mit ihrer Längsrichtung parallel zu den schmalen dünnen Lichtvorhängen 13a, 13b, 13c erstrecken und gegenüber der Ebene der dünnen Lichtvorhänge 13a, 13b, 13c unter einem Winkel von 45 ° angeordnet sind. Auf diese Weise werden die auf jeden der Umlenkspiegel 12a, 12b, 12c umgelenkten Lichtstrahlen in ein und dieselbe Ebene 10 (Fig. 2) umgelenkt, so daß der zunächst vorhandene Seitenversatz vollständig aufgehoben ist. Zwischen den Umlenkspiegeln 12a, 12b und 12c befindet sich der Überwachungsbereich 21, an dessen Ende beim dargestellten Ausführungsbeispiel sich ein streifenförmiger Retroreflektor 22 befindet, der die auftreffenden Lichtstrahlen in sich zurückreflektiert. Sie kehren dann auf dem gleichen Weg wie sie gekommen sind zum Spiegelrad 17 zurück und können beispielsweise durch einen im Sendestrahl angeordneten Teil durchlässigen Spiegel 23 zu einem Photoempfänger 24 umgelenkt werden.

An der Stelle des Retroreflektors 22 kann aber auch ein Lichleitstab oder eine sonstige Lichtempfangsvorrichtung vorgesehen sein.

Trotz der Verwendung seitenversetzter Streifenspiegel 11a, 11b und 11c, die zur Schaffung eines ausgedehnten Lichtvorhanges erforderlich sind, wird so im Überwachungsbereich 21 ein seitenversatzfreier Gesamtlichtvorhang erzielt.

Von Bedeutung ist, daß in der Darstellung nach Fig. 2 die Umlenkspiegel 12a, 12b, 12c derart unter 45 ° zu den dünnen Lichtvorhängen 13a, 13b bzw. 13c geneigt sind, daß die reflektierten Lichtstrahlen nach rechts zum dort angeordneten Retroreflektor 22 verlaufen. Wie sich aus Fig. 3 ergibt ist dadurch der Lichtweg von dem von der Linse 19 am weitesten entfernten Umlenkspiegel 12c zum Retroreflektor 22 geringer als von dem der Linse 19 am nächsten liegenden Streifenspiegel 11a. Hierdurch kann eine gewisse Kompensation der ungleich langen Lichtwege von der Linse 19 zum Retroreflektor 22 erfolgen.

**Ansprüche**

1. Lichtvorhangsvorrichtung mit mehreren unter einem Winkel zu einer Lichteinfallsrichtung in x-Richtung hintereinander und in Richtung y seitenversetzt angeordneten Streifenspiegeln, welche das in der Lichteinfallsrichtung auftreffende Licht eines breiten Lichtvorhanges geringer Tiefenerstreckung unter einem Winkel von vorzugsweise 90 ° in Richtung z ablenken und so unter dem betreffenden Winkel mehrere seitlich versetzt hintereinander angeordnete, entsprechend dünne Lichtvorhänge bilden,
**gekennzeichnet**, durch folgende Merkmale:

a) Jedem Streifenspiel (11a, 11b, 11c) ist je ein Umlenkspiegel (12a, 12b, 12c) zugeordnet,

b) die Umlenkspiegle sind in zueinander parallelen Ebenen angeordnet und in y-Richtung ebenso wie die Streifenspiegel versetzt, in z-Richtung jedoch unversetzt,

c) die Flächennormale jedes Umlenkspiegels bildet mit der z-Richtung je einen Winkel von 45 °, und zwar je in einer zur y-z-Ebene parallelen Ebene (Fig. 2).

2. Lichtvorhangsvorrichtung nach Anspruch 1, dadurch **gekennzeichnet**, daß die in x-Richtung weiter entfernt vom Lichteintritt vorhandenen Umlenkspiegel (12a, 12b, 12c) näher am Überwachungsbereich (21) liegen als die im Bereich des Lichteintritts vorgesehenen Umlenkspiegel.

Fig.1

Fig.3

0 264 027

# Fig.2